Europäisches Patentamt

**European Patent Office**

**Office européen des brevets**

(19)

(11) Publication number: **0 075 435**
A2

## (12) EUROPEAN PATENT APPLICATION

(21) Application number: **82304854.1**

(22) Date of filing: **15.09.82**

(51) Int. Cl.³: **G 02 F 1/03, H 01 S 3/11**

(30) Priority: **22.09.81 GB 8128541**

(43) Date of publication of application: **30.03.83 Bulletin 83/13**

(84) Designated Contracting States: **CH DE FR GB IT LI NL**

(71) Applicant: **J.K. LASERS LIMITED, 23 Somers Road, Rugby Warwickshire, CV22 7DG (GB)**

(72) Inventor: **Wright, James Kenneth, Dr., 7 Leighton Close, Gibbet Hill Coventry (GB)**
Inventor: **Ireland, Clive Lionel Michael, Dr., 88 Hillmorton Road, Rugby Warwickshire (GB)**

(74) Representative: **Waite, Anthony William et al, T. Fletcher Wilson 10 Grosvenor House Grosvenor Road, Coventry CV1 3FZ (GB)**

(54) **Electro-optic cells.**

(57) A Pockels cell (10) comprises an electro-optic crystal having front (12) and rear optical faces cut at the Brewster angle to the longitudinal axis of the cell. The cell is surrounded by dielectric material (13) and a pair of longitudinally spaced apart and longitudinally extending electrodes (15, 16) are formed on the dielectric material. Each electrode extends to the edge of its respective optical face. When used for Q-switching in a laser system, the orientation of the faces minimise Fresnel reflection losses while the electrode configuration ensures that a high extinction ratio may be obtained.

This invention relates to electro-optic cells and particularly, but not exclusively, to electro-optic Pockels cells especially when used for Q-switching in laser systems.

When placed in an electric field, certain materials become anisotropic and so become capable of rotating the electric field vector of a polarised light beam. Such materials are said to possess an electro-optic effect and when such materials are provided with electrodes for applying an electric field they are known as electro-optic cells. One type of electro-optic effect is the Pockels effect and cells which are formed from crystals which exhibit this effect are known as Pockels cells. Pockels cells are used as light polarisation switches and modulators and especially for Q-switching in laser systems. In longitudinal Pockels cells the electric field is applied in the direction of propagation of the light beam.

The most common electro-optic crystals used in the fabrication of Pockels cells include potassium dihydrogen phosphate (KDP), potassium dideuterium phosphate (KD*P) and ammonium dihydrogen phosphate (ADP). These materials are hygroscopic and are relatively fragile and, as a result, there are many problems associated with handling and using Pockels cells.

For switching high power laser beams, the passive insertion loss of a Pockels cell is frequently required to be a minimum. In one technique which is used to reduce Fresnel reflection losses, the electro-optic crystal is mounted in an optical cell filled with a liquid having a refractive index which matches the refractive index of the crystal. The cell window is then provided with an anti-reflection coating of durable dielectric material. Unfortunately, there are various problems associated with this technique.

One problem with this technique occurs at the liquid/crystal interface. Experiment has shown that irregularities in the surface caused by small scratches or polishing marks act as catalysts to surface-chemical reactions when irradiated. The radiation also gives mobility to some of the alkali metal or alkaline earth atoms by breaking the bonds normally holding them in their positions in the crystal. These atoms are then free to migrate to surface sites where they can react with water vapour to form hydrogen gas. Since KDP and its isomorphs contain micro-inclusions of water, this process can occur even in a dry environment.

The gas evolution has been found to be followed by a corrosive reaction through which portions of the crystal surface are slowly converted into water soluble products thus progressively lowering the optical performance. Consequently, it is of advantage to Pockels cell life to operate the crystal in a dry atmosphere and to allow any gas or vapour formed at the optical surface to freely escape. Liquids inhibit this free escape and their use results in the possibility of microbubbles forming at the crystal surfaces.

Another problem associated with the use of liquids is that there are only a limited number of inert liquids that are close in refractive index to that of the electro-optic crystals and that are transparent to optical radiation over a suitable frequency range. Additionally, few liquids are stable at high optical energy densities.

In another technique for reducing Fresnel reflection losses, the input and output faces of the electro-optical crystal are provided with an anti-reflection coating of dielectric material. Owing to the soft hygroscopic nature of electro-optic crystals, these coatings are not particularly durable at high optical energy densities.

In a paper by D. Milam, Applied Optics, Vol. 12, No. 3, March 1973, there is described a Pockels cell in which the front and rear faces are positioned at the Brewster angle to the longitudinal axis of cell in order to reduce the reflection losses. However, when this cell is used for Q-switching in a laser system, a relatively low extinction ratio is achieved and, in this paper, this is attributed to the optical loss suffered at the rear face of the cell to the electric field component generated during passage through the cell. Extinction ratio is the ratio of the energy in the transmitted beam to the energy in the incident beam when the cell and polarisers are used to block the incident beam.

It is an object of this invention to provide a new or improved electro-optic cell in which the above mentioned problems are overcome or reduced.

According to one aspect of this invention there is provided an electro-optic cell comprising an electro-optic crystal having a longitudinal optical axis, an optical input face, an optical output face, each optical face intersecting the longitudinal axis at an angle which is in the region of the Brewster angle for the material of the electro-optic crystal, and a pair of electrodes for applying an electric field to the crystal and arranged so that a beam of plane

BAD ORIGINAL

polarised light may be rotated through 90° with high
uniformity of transmission across the effective apertre
of the cell upon passing twice through the cell.

For a material having a refractive index n, the
Brewster angle θ is defined by tan θ = n. The Brewster
angle is also known as the polarising angle.

The present invention provides a cell which may be
mounted dry and in which reflection losses in the
absence of the electric field are reduced to a minimal
value by the orientation of the faces. Also, when the
cell is used for Q-switching in a laser system, the
arrangement of the electrodes ensure a relatively high
extinction ratio. It has been found possible to
compensate for the losses at the faces of the crystal
by adjusting the voltage applied to the cell and that
the extinction ratio of the cell described in the paper
by Milam was therefore ultimately limited by
arrangement of the electrodes.

According to another aspect of this invention
there is provided an electro-optic cell comprising an
electro-optic crystal having a longitudinal optical
axis, an optical input face, an optical output face,
each optical face intersecting the longitudinal axis at
an angle which is in the region of the Brewster angle
for the material of the electro-optic crystal, and a
pair of electrodes for applying an electric field to
the crystal, the electrodes being mounted at positions
which are longitudinally spaced apart, each electrode
surrounding the longitudinal axis of the cell, and each
electrode extending longitudinally along the cell.

There are two principal problems associated with
the design of electrodes for electro-optic cells and the

BAD ORIGINAL

first of these problems is concerned with the method of applying the electrodes.

Known methods of applying electrodes generally involve direct application of conducting material onto the crystal surfaces. These methods include metallic evaporation and the use of paints or epoxy glues loaded with gold, silver or aluminium to make them conducting. To different degrees, these electrode materials tend to disappear into the crystal under operating conditions. The effect is due to ion migration under the influence of the applied electric field and may be reduced by arranging for the crystal only to be under the influence of a high electric field for short periods.

It is another object of this invention to provide an elector-optic cell having a new or improved electrode design which overcomes or reduces the above-mentioned problem.

According to a further aspect of this invention there is provided an electro-optic cell comprising an electro-optic crystal, a pair of electrodes mounted on the crystal for applying an electric field thereto, and a layer of dielectric material extending at least between each electrode and the crystal.

The dielectric material provides capacitive coupling between the electrodes and the crystal and prevents the electrodes from disappearing into the crystal.

The second principal problem arises where the electrodes are closely spaced.

The electric field in the crystal resulting from the voltage applied to the electrodes not only extends between the electrodes but also to the surrounding earth. As a result, the electric potential can vary between the surfaces of the crystal unless the electrodes are properly structured. It may be shown that transmission uniformity and extinction ratio of an electro-optic cell positioned between polarisers depend critically on local variations in the electric potential between the crystal input and output faces. Transmission uniformity and extinction ratio may both be improved by the use of closely spaced electrodes since this will tend to confine the electric field within the crystal. Electrode design is discussed in the following three references: Vitkov M.G., Opt. Spectrosc., Vol. 24, page 420 (1968); Steinmetz L.L., Pouliot T.W. and Johnson B.C., Appl Optics Vol. 12, No. 7, p 1468 (1973); and Kuzovkova T.A., Nilov E.V. and Flegontov., Opt. Spectrosc, Vol. 47, No. 5, page 538 (1979). However, if the electrodes are closely spaced, this may cause surface tracking between them and subsequent electrical breakdown. Surface tracking is aided by the relatively low resistivity of the materials used as electro-optic crystals. Although surface tracking may be inhibited by mounting the crystal in a suitable liquid, this will cause the various problems mentioned above.

In order to overcome this second problem, the cell may be arranged so that the dielectric material extends across the space separating the electrodes.

The provision of dielectric material extending across the space separating the electrodes inhibits tracking and permits a crystal having closely spaced electrodes to be dry mounted without the risk of surface tracking.

Where it is desired to use very closely spaced electrodes, the first electrode may be mounted between an inner and an outer layer of dielectric material, at least the outer layer also extending between the second electrode and the crystal.

The provision of inner and outer electrodes inhibit inter-electrode electrical breakdown.

This invention will now be described in more detail, by way of example, with reference to the accompanying drawings in which:-

Figure 1 is a perspective view of a Pockels cell embodying this invention;

Figure 2 is a ray diagram illustrating the operation of the cell shown in Figure 1;

Figure 3 is a graph of reflection coefficients;

Figure 4 is a perspective view of another Pockels cell embodying this invention;

Figure 5 is a cross-sectional view on the line 5-5 of Figure 4;

Figure 6 is a perspective view of a jig for mounting an electro-optical cell as shown in Figure 1;

Figure 7 is a block diagram of a laser system including an electro-optic cell embodying this invention, and

Figure 8 shows waveforms appearing in the system of Figure 7.

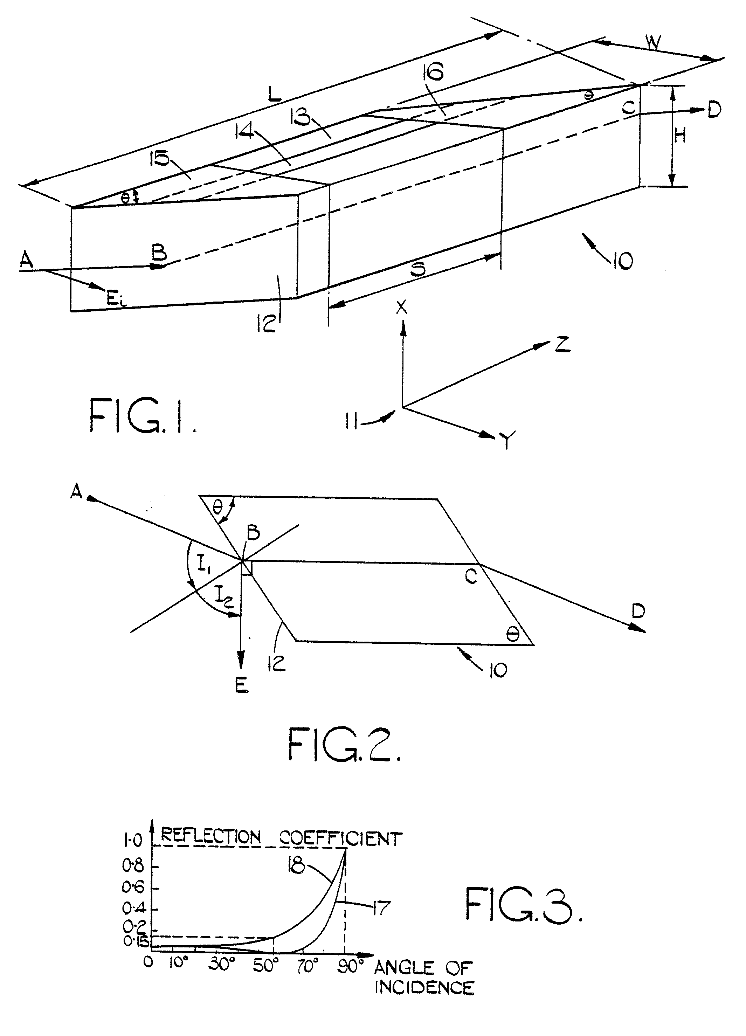

Referring now to Figure 1, there is shown a longitudinal Pockels cell generally indicated at 10. The Pockels cell is formed from a crystal of potassium dihydrogen phosphate (KDP) and the crystallographic axes are shown at 11. The crystal is cut to a rhombohedral shape with its longitudinal axis parallel to the Z crystallographic axis and its sides parallel to the X and Y axes. The crystal has a front optical face 12 at one end and a rear optical face at the other end. As shown in Figure 1, the crystal is cut so that the angles between the input and output faces and respective sides of the crystal are equal to an angle 0, which is equal to the Brewster angle for the material of the crystal. As the sides of the cell are parallel to the longitudinal optical axis of the cell, the angle between each face and the longitudinal axis is also equal to the Brewster angle. For KDP, the Brewster angle is approximately 56⁰. The entire crystal with the exception of the optical faces is covered with a thin layer of material 13 of high dielectric strength. The material is provided with an overlap indicated at 14. A pair of spaced apart electrodes 15 and 16 are formed on the sides of the crystal for the purpose of applying an electric field in the direction of the longitudinal axis. The electrodes extend longitudinally along the cell and surround the longitudinal axis. The electrodes 15, 16 are formed by painting the dielectric material 13 with paint loaded with gold, silver or aluminium. In the present example, each electrode extends to its respective end surface of the crystal thereby minimising electric potential variations between the crystal faces due to any potential differences between the electrodes and surrounding parts. In the present example, the material 13 is 10 μm thick polyethylene terephthalate. In a modification to the arrangement of Figure 1, each electrode extends beyond its respective end of surface of the crystal.

The dimensions of the crystal shown in Figure 1 are as follows:-

| | | | |
|---|---|---|---|
| height | (H) | 9 | mm |
| length | (L) | 33 | mm |
| width | (W) | 13.5 | mm |
| inter-electrode spacing | (S) | 10 | mm |

Referring now to Figure 2, there is shown a ray diagram illustrating the operation of the Pockels cell 10. A beam AB is incident on the input face 12 at an angle $I_1$. This beam is split into a reflected beam BE, which is reflected at an angle $I_2$, and a refracted beam BC which passes through the cell. The refracted beam BC emerges as a beam CD from the output face. If, as is shown in Figure 2, the angle of incidence $I_1$ is equal to the Brewster angle, the reflected beam BE and the refracted beam BC will be perpendicular to each other. Since the front face 12 is cut at the Brewster angle to the side of the crystal, the refracted ray is parallel to this axis. Referring now to Figure 1, if the incident beam is polarised so that the electric field vector $E_i$ lies in the plane of incidence, as is well known there will be no reflected beam. Consequently, if the Pockels cell 10 is positioned in an optical system so that the refracted beam passes along the longitudinal axis and so that the input beam is polarised with its electric field vector in the plane of incidence, there will be no reflected beam and so the cell 10 can be used where it is desired to eliminate reflection losses. There will also be no reflection loss at the rear face when there is no potential difference between the electrodes.

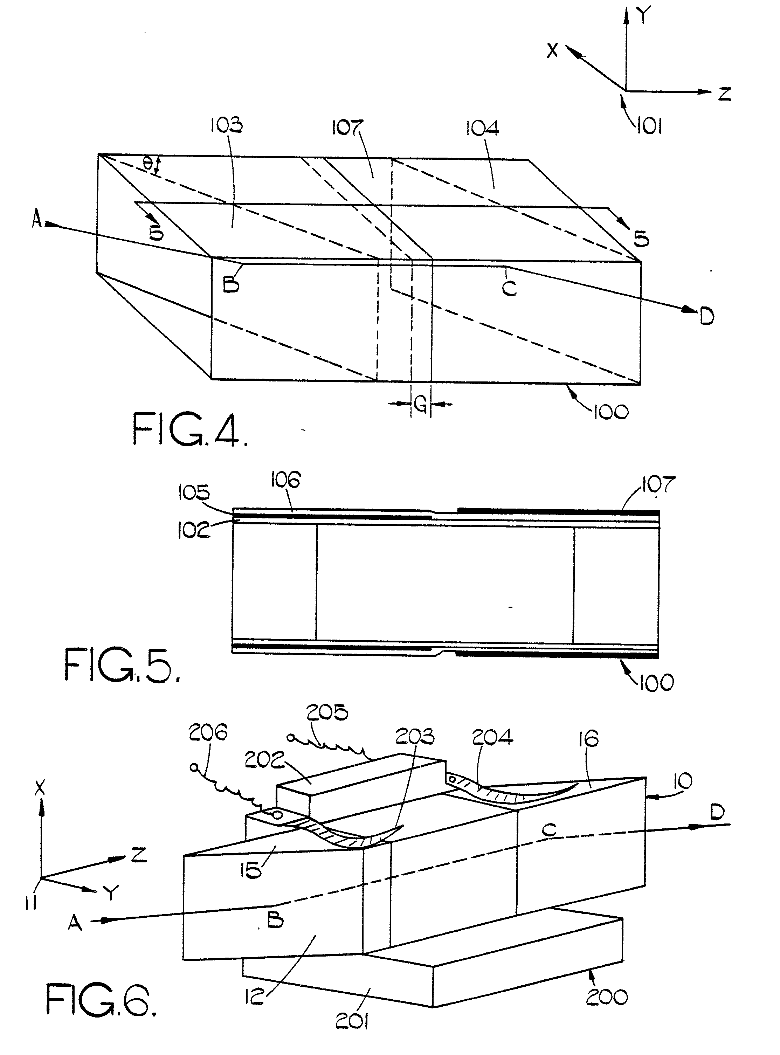

Referring now to Figure 3, there is shown a pair of graphs 17 and 18 of the variation of reflection coefficient with angle of incidence with the electric field vector respectively lying in the plane of
incidence and perpendicular to this plane. The graphs
shown in Figure 3 apply to material having a refractive
index equal to 1.5 and so apply to KDP and other
materials of similar refractive index. As is clear
from the graph 17, it is not necessary for light to be
incident at precisely the Brewster angle for
substantial elimination of the reflected beam.
Consequently, it is only necessary that light is
incident at an angle which is in the region of the
Brewster angle and likewise the angle θ shown in Figure
1 need only be in the region of this value. The angle
θ should, however, be sufficiently close to the
Brewster angle for there to be no danger of the
reflected light causing damage to the system in which
the Pockels cell is used. This will normally be
achieved. if the angle θ is chosen so that the amount of
light reflected at each interface is less than 0.5% of
the incident light. This will result in less than 1%
of the light being reflected during each pass through
the cell. For materials having a refractive index of
1.5, this will be achieved if the angle 0 lies in the
range 48⁰ to 62⁰.

The dielectric material 13 provides a capacitive
coupling between the electrodes 15 and 16 and the
crystal.   In this example, the inter-electrode
capacitance is 5 pF and the coupling capacitance at
each crystal electrode is approximately 500 pF.
Consequently, 98% of the voltage applied to the
electrodes appears across the crystal. The resistivity
of KDP is approximately $10^{10}$ Ω cm and, since this is
much lower than the resistivity of polyethylene
terephthalate, any voltage appearing across KDP will
decay with a time constant of approximately 50 mS. For
this reason, the cell is normally used in a pulsed-on mode of operation. Also, as polyethylene terephthalate is a low loss material, its use does not restrict the high frequency response of the cell 10.

Referring now to Figures 4 and 5, there is shown a Pockels cell 100. The Pockels cell 100 is formed from a crystal of KDP of identical dimensions to the crystal shown in Figure 1 with identical orientation to the crystallographic axes which are indicated at 101. The sides of the crystal are covered with a thin layer of dielectric material 102 which extends as shown in 103 and 104 beyond the edges of the crystal. The cell 100 is provided with a first electrode 105 which is formed on top of the layer 102 and which extends from the free end of this layer to a position near the middle of the crystal. The cell 100 includes a second layer of dielectric material 106 which covers the electrode 105 and the free part of the layer 102 and a second electrode 107 is formed on the surface of this layer. The electrode 107 extends from the free end of the layer 106 opposite to the electrode 105 to a position near the middle of the crystal. As with the cell 10 shown in Figure 1, the dielectric material is 10 µm thick polyethylene terephthalate and the electrodes are formed by coating this material with a conductive film such as silver loaded paint or evaporated aluminium. The electrodes 105 and 107 are spaced by a distance (G) of 3 mm.

The use of the second layer 106 of dielectric material permits the electrodes to be closely spaced thereby providing for very high extinction and high transmission uniformity without the problems of inter-electrode breakdown. In the case of polyethylene terephthalate, the dielectric strength is approximately 10kV for a 10 µm thick sheet. Also, by extending both the dielectric material and the electrodes beyond the edges of the material, a further improvement is obtained to the extinction ratio and transmission uniformity. In a modification to the arrangement shown in Figures 4 and 5, the electrodes terminate at their respective end surfaces of the crystal.

In another arrangement of a Pockels cell, not shown, embodying this invention, both the front and rear faces are inclined at the Brewster angle to the same side of the crystal so that the crystal has the shape of a trapizium in plan view. In a further arrangement, the front face is inclined at the polarising angle to a side of the crystal whilst the rear face is inclined at the Brewster angle to the bottom surface of the cell.

In the arrangements shown in Figure 1 and Figures 4 and 5, in order to avoid the overlap, dielectric material of tubular shape may be used.

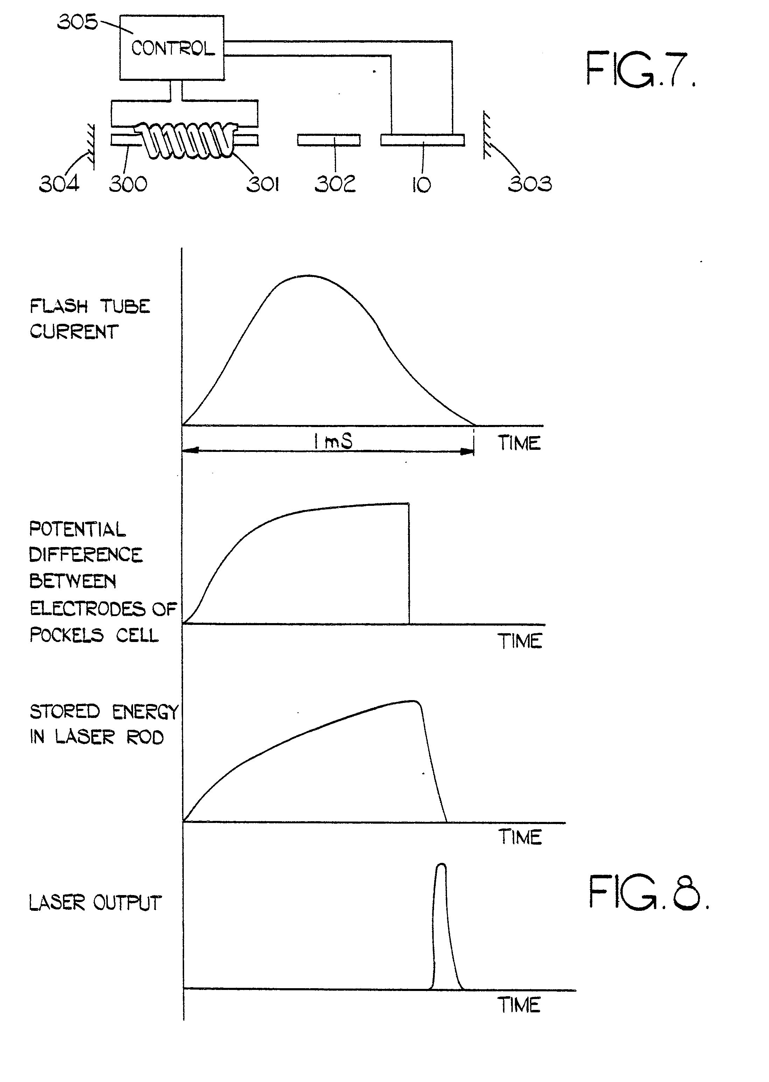

Referring now to Figure 6, there is shown a jig 200 for mounting the Pockels cell 10. The jig 200 comprises a base section 201 and a back section 202, both of which are made of insulating material. The jig 200 further includes a pair of spring contacts 203, 204 for connecting the electrodes 15 and 16 to a pair of leads 205, 206.

In Figure 7, there is shown a pulsed laser system which includes the Pockels cell 10. The laser system comprises a ruby rod 300 surrounded by a flash tube 301, a polariser 302, the Pockels cell 10, a mirror 303, and a partially reflecting output mirror 304. The polariser 302 is orientated with respect to the Pockels cell 10 so that the light beam is polarised with the electric field vector lying in the plane of incidence. The flash tube 301 and the Pockels cell 10 are operated by a control circuit 305, of well known construction.

In operation, as shown in Figure 8, the flash tube 301 is fired by a 1mS current pulse and simultaneously a potential difference is applied between the electrodes of the Pockels cell. The potential difference applied to the electrodes quickly rises to a value at which polarised light is rotated through 90° after making two passes through the cell 10 thereby blocking the lasing action. Consequently, energy is stored in the laser rod. Shortly before the end of the current pulse applied to the flash tube, the potential difference applid to the electrodes is released and the energy stored in the rod 300 is released as a high intensity pulse. It is to be appreciated that the decay of the electric field in the Pockels cell does not cause a problem as the potential difference is applied to the electrodes for less than 1 mS and the time constant of the cell is 50 mS.

When the potential difference is applied to the electrodes, as polarised light passes through the Pockels cell 10 from the polariser 302 to the mirror 303 the polarisation changes from plane polarisation at the front face to eliptical polarisation at the rear face. Consequently, part of the light is reflected at the rear face. However, as the lasing action is prevented when the potential difference is applied, the total amount of light energy reflected in this way is negligible. When the potential difference is released, the polarisation remains unchanged during passage through the cell 10 and, as the front and rear faces are cut at Brewster angle and the light is polarised with the electric vector in the plane of incidence, no reflection occurs.

If the beam offset caused by the cell 10 is found undesirable, this may be eliminated by using a pair of similar cells in series.

As mentioned above, whenthe potential difference is applied to the electrodes, the polarisation is changed to eliptical polarisation at the rear face and so there are both horizontal and vertical components of the electric field present in the beam at this face. As the vertical component suffers reflection losses this creates an imbalance between the vertical and horizontal components. It has been found possible to compensate for this loss by adjusting the potential difference to a value at which the polarised light is rotated exactly through 90° after making two passes through the cell. Thus, the correct value for the potential difference is slightly displaced from the value which would give 90° rotation with the optical faces orientated perpendicularly to the longitudinal axis.

As explained in the paper by Steinmetz et al, a high uniformity of transmission across the effective cell aperture may be achieved when using the electrode configuration shown in Figure 1. Consequently, in the system shown in Figure 7 polarised light may be rotated through 90° with high transmission uniformity thereby achieving a high value for extinction ratio.

0075435

C L A I M S

1. An electro-optic cell (10;100) comprising an electro-optic crystal having a longitudinal optical axis, an optical front face (12), an optical rear face, and a pair of electrodes (15,16; 105,107) for applying an electric field to the crystal, characterised in that each optical face (12) intersects the longitudinal axis at an angle which is in region of the Brewster angle for the material of the electro-optic crystal and the electrodes (15,16; 105,107) are arranged so that a beam of plane polarised light may be rotated through 90° with high uniformity of transmission across the effective aperture of the cell upon passing twice through the cell.

2. An electro-optic cell as claimed in Claim 1 characterised in that the electrodes (15,16; 105,107) are mounted at positions which are longitudinally spaced apart, each electrode surrounds the longitudinal axis of the cell, and each electrode extends longitudinally along the cell.

3. An electro-optic cell as claimed in Claim 2 characterised in that each electrode (15,16; 105, 107) extends at least to the edge of its associated optical face (12).

4. An electro-optic cell as claimed in any one of the preceding claims characterised in that a layer of dielectric material (13; 102) extends at least between each electrode (15, 16; 105, 107) and the crystal.

5. An electro-optic cell as claimed in Claim 4 characterised in that the layer of dielectric material (13; 102) also extends across the space separating the electrodes.

6. An electro-optic cell as claimed in Claim 5 characterized in that one electrode (105) is mounted between an inner (102) and outer (106) layer of dielectric material, at least the outer layer (106) also extending between the other electrode (107) and the crystal.

7. An electro-optic cell as claimed in any one of the preceding claims characterised in that the angle between the longitudinal axis and each optical face is selected so that, when a light beam incident on one of the faces is polarised so that its electric field vector lies in the plane of incidence, the reflection loss at that face is less than 0.5%.

8. An electro-optic cell as claimed in Claim 7 characterised in that the angle between the longitudinal axis and each optical face is equal to Brewster angle.

9. An electro-optic cell (10; 100) comprising an electro-optic crystal having a longitudinal optical axis, an optical front face (12), an optical rear face, and a pair of electrodes (15,16; 105,107) for applying an electric field to the crystal, characterised in that each optical face (12) intersects the longitudinal axis at an angle which is in the region of the Brewster angle for the material of the electro-optic crystal, the electrodes (15,16; 105,107) are mounted at positions which are longitudinally spaced apart, each electrode surrounds the longitudinal axis of the cell, and each electrode extends longitudinally along the cell.

10. An electro-optic cell (10;100) comprising an electro-optic crystal and a pair of electrodes (15,16; 105,107) mounted on the crystal for applying an electric field thereto, characterised in that a layer of dielectric material (13, 102) extends at least between each electrode and the crystal.

11. An electro-optic cell as claimed in Claim 10 characterised in that the layer of dielectric material (13;102) also extends across the space separating the electrodes.

12. An electro-optic cell as claimed in Claim 11 characterised in that one electrode (105) is mounted between an inner (102) and an outer (106) layer of dielectric material, at least the outer layer (106) also extending betweenthe other electrode (107) and the crystal.

FIG.1.

FIG.2.

FIG.3.

FIG.4.

FIG.5.

FIG.6.

0075435

305 ── CONTROL

304    300    301    302    10    303

FIG.7.

FLASH TUBE
CURRENT

|← 1 mS →|                    TIME

POTENTIAL
DIFFERENCE
BETWEEN
ELECTRODES OF
POCKELS CELL

TIME

STORED ENERGY
IN LASER ROD

TIME

LASER OUTPUT

TIME

FIG.8.